# EUROPEAN PATENT SPECIFICATION

(11) **EP 2 964 061 B1**
(45) Date of publication and mention of the grant of the patent: **01.02.2017**
(21) Application number: 14707799.4
(22) Date of filing: 04.03.2014
(51) Int. Cl.: A47J 31/44

(54) **AN OPENING DEVICE OF COFFEE CAPSULES**
ÖFFNUNGSVORRICHTUNG FÜR KAFFEEKAPSELN
DISPOSITIF D'OUVERTURE DE CAPSULES DE CAFÉ

(30) Priority: 07.03.2013 IT AN20130050
(43) Date of publication of application: 13.01.2016
(73) Proprietor: Silvestri, Isabella, 60030 Monsano (AN) (IT)
(72) Inventor: Silvestri, Isabella, 60030 Monsano (AN) (IT)
(74) Representative: Baldi, Claudio
(86) International application number: PCT/EP2014/054191
(87) International publication number: WO 2014/135550

(56) References cited:
- WO-A1-2013/093854
- DE-A1-102008 041 793
- US-A1- 2010 050 880
- US-A1- 2010 212 520

## Description

The present patent application for industrial invention relates to a device for fast precise opening of coffee capsules.

As it is known, the use of electrical coffee machines has become quite popular in homes or offices. These machines are loaded with prepacked coffee pods or coffee capsules that contain a dose of coffee powder to make a cup of coffee.

Coffee pods practically consist in a container made of non-rigid tissue paper able to act as a filter, meaning that it hermetically contains a single coffee powder dose, while it allows for the passage of pressurized water through the container walls.

Coffee capsules, instead, consists in a small rigid container made of plastic or similar material, which is not able to act as a filter like the tissue paper used to make coffee pods.

More precisely, said capsules consists in a container shaped as a small bowl made of molded plastics, which is hermetically closed by a thin sheet of tinfoil or laminated aluminum, the edges of which are attached along the entire border of said bowl.

Coffee capsules have been extremely successful on the market because they are easy and practical to use, both when they are loaded in the electrical coffee machine, and when they are removed from the machine, disposing the used container in the garbage can.

A problem has resulted from the implementation of waste separation regulations according to which coffee powder, plastic containers and tinfoil lids must be wasted separately in different containers and taken to the municipal dump.

Currently, the three parts are separated manually, this being a great inconvenience with unsatisfactory results.

The operation requiring the highest attention and the longest time is the detachment of the tinfoil sheet, which is difficult to take apart because of the difficulties encountered in grabbing its edges, which are perfectly trimmed and attached on the border of said plastic bowl.

In view of this, the user prefers to break the tinfoil sheet in the center using a sharp tool, in order to obtain two or more angular sectors that, although irregular, can be easily grabbed and pulled until their edges are detached from the border of the plastic bowl.

During tearing and detachment, the user must manipulate the capsule carefully in order to prevent the coffee powder from coming out of the bowl. However, this occurs often, getting the user's hands, the desk or the floor dirty.

WO2013/093854 discloses a system and method for forming figures from used capsules and containers.

US2010/212520 discloses a device for removing coffee grounds from special coffee capsules made of aluminum and for reducing the size of said capsules.

DE102008041793 discloses a disposable beverage powder capsule i.e. used coffee capsule. An opening device for recycling e.g. capsule material, has an holding unit, where the device moves the capsule, which is provided in the holding unit, to a cutting unit suitable to cut-open a cover.

US2010050880 discloses a device for separating contents and package of a capsule, according to the preamble of claim 1.

The main purpose of the present invention is to provide a device for fast precise opening of used coffee capsules.

Another purpose of the present invention is to provide a device for fast precise opening of used coffee capsules, which is inexpensive to make, easy, safe and practical to use, as well as compact.

These purposes have been achieved by the present invention, the primary characteristics of which are claimed in the first attached claim.

The present invention consists in a device for fast precise opening of used coffee capsules, which comprises a first part, adapted to exactly house and block the used coffee capsule, and a second part, adapted to be coupled and cooperate with the first part in order to perimetrally cut the thin sheet made of tinfoil or laminated aluminum used to seal the capsule.

The first part consists in a cylindrical body with vertical axis having an upper opening that provides access to a circular cavity, where the coffee capsule is exactly housed, except for the annular border of the plastic bowl that contains the coffee powder.

The annular border finds a corresponding support surface on the annular crown that surrounds the upper opening, which practically acts as stop for the capsule during the insertion into the cavity of the first component.

Said cavity is provided with a bottom wall from which points protrude, being adapted to be driven into the bottom of said plastic bowl, which is consequently prevented from rotating inside the cavity.

The second part consists in a cylindrical body with vertical axis, which ends in lower position with a circular collar adapted to receive and exactly embrace said upper opening of the first part, in such manner to provide a "male-female" coupling, leaving said coupled parts free to rotate mutually.

Inside said collar an annular series of thin sharp teeth is provided, which are regularly spaced along a circumference that coincides with the one defining the internal side of said annular border of the plastic bowl that contains the coffee powder.

In view of the above, during the insertion of the upper opening of the first part into the lower collar of the second part, the sharp teeth automatically penetrate through the thin sheet of tinfoil or laminated aluminum that seals the capsule previously loaded in the cavity of the first part.

Now, it is imply necessary to drive the second part into rotation with respect to the first part in order to open the capsule easily and rapidly, perfectly cutting the tinfoil sheet along the internal border of the bowl. Upon detaching the two parts, on one side, the open bowl is situated inside the cavity of the first part, whereas the tinfoil lid remains inside the collar of the second part.

Now the user can easily empty the bowl and throw the coffee powder in a first garbage can, the plastic bowl in a second garbage can and the tinfoil lid in a third garbage can for separate waste collection.

For explanatory reasons the description of the invention continues with reference to the attached drawing, which only has an illustrative, not limiting value, wherein:
- Fig. 1 is a diagrammatic view of a standard coffee capsule;
- Fig. 2 is an exploded view of the device of the invention sectioned with a plane passing through its longitudinal axis;
- Fig. 3 is substantially identical to Fig. 2 except for the fact that the device of the invention is shown in its working configuration;
- Fig. 4 is the view of Fig. 2 according to direction IV of Fig. 2.

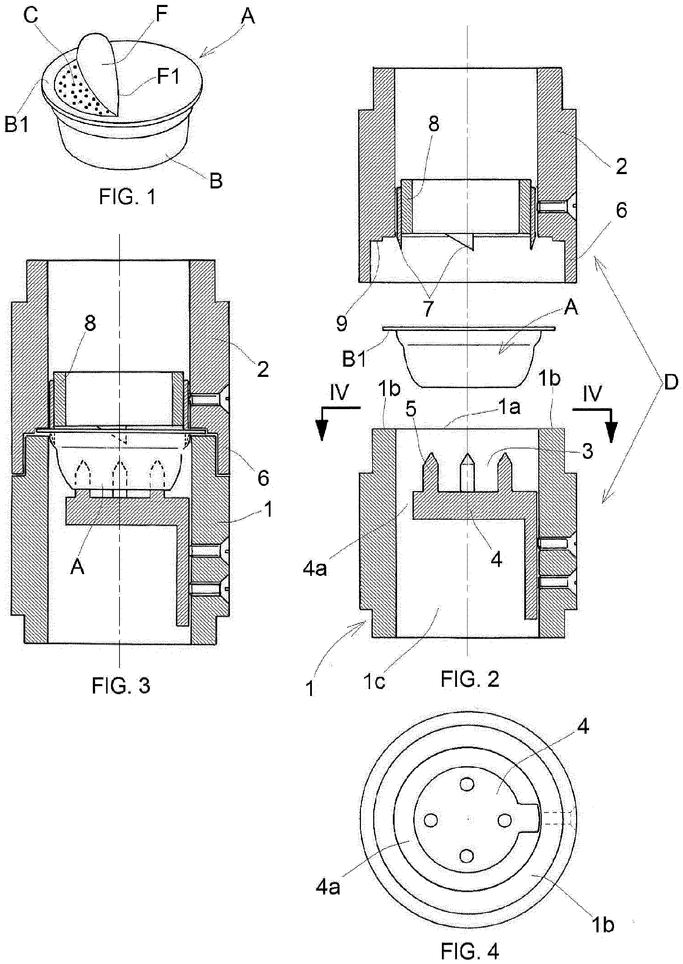

Referring to Fig. 1, the configuration of a standard coffee capsule (A) is preliminarily described, which comprises a container shaped as a small bowl (B) made of molded plastics that contains the coffee powder (C) and is hermetically closed by a thin tinfoil or laminated aluminum sheet (F), the edges of which (F1) are attached along the entire border (B1) of said bowl (B), said border (B1) practically consisting in a sort of flat annular flange.

Referring to the aforementioned figures, the invention consists in a device (D) for fast precise opening of capsules (A), which comprises a first part (1), adapted to exactly house and block the capsule (A), and a second part (2), adapted to be coupled and cooperate with the first part in order to perimetrally cut the thin sheet of tinfoil or laminated aluminum (F) used to seal the capsule (A).

More precisely, the first part (1) consists in a cylindrical body with vertical axis, which is provided with an upper opening (1 a) providing access to a circular cavity (3), where the coffee capsule (A) is exactly housed, except for the annular border (B1) of the plastic bowl (B), which finds a suitable support surface on the annular crown (1 b) that surrounds the opening (1 a), said crown (1 b) practically acting as stop for the capsule (A) during the insertion into the cavity (3) of the first part (1).

Said cavity (3) is provided with a bottom wall (4) from which several points (5) protrude, being adapted to be driven into the bottom of said plastic bowl (B).

According to the preferred embodiment of the invention, said cylindrical body with vertical axis is internally empty and said bottom wall (4) only partially closes the axial duct (1 c) that crosses said empty cylindrical body.

Such a constructive feature makes it easier to clean and wash the cavity (3), where coffee powder may fall or stagnate during the manipulation of the open capsule (A).

In such a circumstance, the coffee powder falls down passing through the openings (4a) of the bottom wall (4) and comes out of the first part (1) through the end of the empty body.

The second part (2) consists in a cylindrical body with vertical axis, which ends in lower position with a circular collar (6) adapted to receive and exactly embrace said upper opening (1a) of the first part (1), in such manner to provide a "male-female" coupling, leaving said coupled parts free to rotate mutually.

Inside said collar (6) an annular series of thin sharp teeth (7) is provided, which are regularly spaced along a circumference that coincides with the one defining the internal side of said annular border (B1) of the plastic bowl (B).

According to the preferred embodiment of the present invention, also the second part (2) consists in an empty cylindrical body, in which a bush (8) is recessed, acting as support for said annular series of sharp teeth (7).

Attention is drawn on the fact that the collar (6) is internally provided with an annular shoulder (9) all around the sharp teeth (7).

When the insertion of the upper opening (1 a) of the first part (1) inside the lower collar (6) of the second part (2) is completed, the annular shoulder (9) is stopped against said annular crown (1 b) that surrounds the opening (1 a), in such manner that the border (B1) of the bowl (B) is practically tightened between said annular shoulder (9) and the annular crown (1 b).

On the other hand, it must be noted that during the insertion of the upper opening (1a) of the first part (1) into the lower collar (6) of the second part, said sharp teeth (7) automatically penetrate through the thin sheet of tinfoil or laminated aluminum (F) that seals the capsule (A) previously loaded in the cavity (3) of the first part (1).

It is now simply necessary to drive the second part (2) into rotation with respect to the first part (1) in order to open the capsule (A) easily and rapidly, perfectly cutting the tinfoil lid along the internal border of the bowl (B).

Therefore, upon detaching the two parts, on one side, the open bowl (B) is situated inside the cavity (3) of the first part (1), whereas the tinfoil sheet (F) remains inside the collar (6) of the second part (2).

## Claims

1. A device for fast precise opening of coffee capsules of the type formed of a container shaped as a small bowl (B) made of molded plastics that contains coffee powder (C) and is hermetically closed by a thin tinfoil or laminated aluminum sheet (F), the edges of which (F1) are attached along the entire border (B1) of said bowl (B), device (D) comprising:
- a first part (1) provided with upper opening (1 a) providing access to a circular cavity (3), where the coffee capsule (A) is exactly housed, except for the annular border (B1) of the plastic bowl (B), which is intended to find a corresponding support surface on the annular crown (1 b) that surrounds said opening (1 a);
- a second part (2) provided with a circular collar (6) adapted to receive and exactly embrace said upper opening (1a) of the first part (1) in such manner to practically provide a "male-female" coupling; inside said collar (6) an annular shoulder (9) is provided,
**characterized in that**
said second part (2) comprises an annular series of thin sharp teeth (7) that are regularly spaced along a circumference that coincides with the one defining the internal side of said annular border (B1) of the plastic bowl,
said annular shoulder (9) surrounds said thin sharp teeth (7), and
said coupled first part (1) and second part (2) are free to rotate mutually.

2. The device of the preceding claim, wherein said cavity (3) is provided with a bottom wall (4) from which points (5) protrude, being adapted to be driven into the bottom of said plastic bowl (B).

3. The device of any one of the preceding claims, wherein said second part (2) internally incorporates a bush (8) acting as support for said annular series of sharp teeth (7).

4. The device of any one of the preceding claims, wherein said first part (1) and said second part (2) are two internally empty cylindrical bodies.

5. The device of the preceding claim, wherein said bottom wall (4) only partially closes the axial duct (1c) crossing the empty cylindrical body of the first part (1).

## Patentansprüche

1. Vorrichtung zum schnellen und präzisen Öffnen der Kaffeekapseln des Typs, der aus einem Behälter in Form einer kleinen, aus Kunststoff geformten Schale (B) besteht, die das Kaffeepulver (C) enthält und durch eine dünne Staniolfolie oder eine laminierte Aluminiumfolie (F) hermetisch verschlossen ist, deren Rand (F1) längs der gesamten Kante (B1) der Schale (B) befestigt ist,
wobei die Vorrichtung (D) Folgendes umfasst:
- einen ersten Bestandteil (1), der eine oberseitige kreisförmige Öffnung (1a) für den Zugang zu einem kreisförmigen Hohlraum (3) aufweist, in dem die Kaffeekapsel (A) aufgenommen ist, mit Ausnahme der ringförmigen Kante (B1) der Kunststoffschale (B), welche dazu bestimmt ist, eine entsprechende Auflagefläche auf dem ringförmigen Kranz (1b) zu finden, der die Öffnung (1a) umgibt;
- einen zweiten Bestandteil (2), der einen kreisförmigen Bund (6) aufweist, der dazu geeignet ist, die obere Öffnung (1a) des ersten Bestandteils (1) aufzunehmen und genau zu umschließen, derart, dass praktisch eine "Männlich-Weiblich-Kopplung" geschaffen wird; im Inneren des Bundes (6) ist eine ringförmige Schulter (9) vorgesehen;
**dadurch gekennzeichnet, dass**
der zweite Bestandteil (23) eine ringförmige Reihe von feinen, scharfen Zähnen (7) umfasst, die regelmäßig beabstandet längs eines Umfangs angeordnet sind, der jenem entspricht, der die Innenseite der ringförmigen Kante (B1) der Kunststoffschale (B) definiert,
die ringförmige Schulter (9) die feinen, scharfen Zähne (7) umgibt und
der erste Bestandteil (1) und der zweite Bestandteil (2) miteinander verbunden sind und sich frei relativ zueinander drehen können.

2. Vorrichtung nach dem vorstehenden Anspruch, wobei der Hohlraum (3) eine Bodenwand (4) aufweist, aus der einige Spitzen (5) auskragen, die dazu geeignet sind, in den Boden der Kunststoffschale (B) eingetrieben zu werden.

3. Vorrichtung nach einem der vorstehenden Ansprüche, wobei der zweite Bestandteil (2) inwendig eine Buchse (8) umfasst, die als Träger für die ringförmige Reihe von scharfen Zähnen (7) dient.

4. Vorrichtung nach einem der vorstehenden Ansprüche, wobei der erste Bestandteil (1) und der zweite Bestandteil (2) zwei inwendig hohle, zylindrische Körper sind.

5. Vorrichtung nach dem vorstehenden Anspruch, wobei die Bodenwand (4) den axialen Kanal (1 c), der den hohlen, zylindrischen Körper des ersten Bestandteils (1) durchquert, nur teilweise verschließt.

## Revendications

1. Dispositif pour l'ouverture rapide et précise des dosettes de café du type formées par un récipient en forme de petite cuvette (B), moulé en plastique, contenant de la poudre de café (C) et fermé hermétiquement par une mince feuille de papier d'aluminium ou d'aluminium laminé (F), dont les segments (F1) sont attachés le long de tout le bord (B1) de ladite cuvette (B), dispositif (D) comprenant :
- un premier composant (1) qui présente supérieurement une embouchure circulaire (1 a) d'accès à une cavité circulaire (3), où peut précisément loger la dosette (A) de café, à l'exception du bord annulaire (B1) de la cuvette en plastique (B) qui est destiné à trouver une surface d'appui conforme sur la couronne annulaire (1 b) qui entoure ladite embouchure (1 a) ;
- un second composant (2) qui présente un collier circulaire (6) apte à accueillir et embrasser exactement ladite embouchure supérieure (1 a) du premier composant (1), de façon à réaliser pratiquement un accouplement du type « mâle et femelle » ; à l'intérieur du dit collier (6) est présent un épaulement annulaire (9) ;
**caractérisé en ce que**
ledit second composant (2) comprend une série annulaire de fines dents tranchantes (7), régulièrement espacées le long d'une circonférence qui coïncide avec celle qui définit le côté interne du dit bord annulaire (B1) de la cuvette en plastique (B),
ledit épaulement annulaire (9) entoure lesdites fines dents tranchantes (7), et
lesdits premier composant (1) et second composant (2) accouplés sont libres de tourner réciproquement.

2. Dispositif selon la revendication précédente où ladite cavité (3) présente une paroi de fond (4) de laquelle débordent des pointes (5) aptes à s'enficher dans le fond de ladite cuvette en plastique (B).

3. Dispositif selon l'une des revendications précédentes, où ledit second composant (2) incorpore à l'intérieur une douille (8), qui fonctionne en tant que support pour ladite série annulaire de dents tranchantes (7).

4. Dispositif selon l'une des revendications précédentes, où ledit premier composant (1) et ledit second composant (2) sont deux corps cylindriques, tous les deux caves à l'intérieur.

5. Dispositif selon la revendication précédente où ladite paroi de fond (4) ne ferme que partiellement le conduit axial (1 c) qui traverse le corps cylindrique cave du premier composant (1).
